# FASCICULE DE BREVET EUROPEEN

(11) **EP 2 456 388 B1**
(45) Date de publication et mention de la délivrance du brevet: **09.05.2018**
(21) Numéro de dépôt: 10752056.1
(22) Date de dépôt: 20.07.2010
(51) Int. Cl.: A61C 8/00

(54) **DISPOSITIF DE STABILISATION ADDITIONNEL POUR IMPLANT DENTAIRE ENDO-OSSEUX**
ERGÄNZENDE STABILISIERUNGSVORRICHTUNG FÜR EIN KNOCHENINTERNES ZAHNIMPLANTAT
SUPPLEMENTARY STABILIZING DEVICE FOR AN ENDOOSSEOUS DENTAL IMPLANT

(30) Priorité: 22.07.2009 FR 0955129
(43) Date de publication de la demande: 30.05.2012
(73) Titulaire: Saddle Implant Technologies Sàrl, 1202 Geneve (CH)
(72) Inventeur: Dacremont, Philippe, 83110 Sanary Sur Mer (FR)
(74) Mandataire: Barbot, Willy
(86) Numéro de dépôt international: PCT/FR2010/051529
(87) Numéro de publication internationale: WO 2011/010061

(56) Documents cités:
- WO-A1-01/93775
- DE-A1- 19 936 061
- FR-A1- 2 915 677

## Description

### Arrière-plan de l'invention

La présente invention se rapporte au domaine général des implants dentaires.

Plus particulièrement, l'invention concerne les implants dentaires endo-osseux et, plus précisément, la stabilisation de ces implants.

Actuellement, les implants endo-osseux sont classiquement basés sur l'utilisation d'un pied d'ancrage, par exemple une vis d'ancrage, adapté pour être installé dans un os de mâchoire d'un patient. Ce pied d'ancrage coopère avec un pilier externe, destiné à être fixé dans le pied d'ancrage. Le pilier externe comprend donc des moyens pour être fixé dans le pied d'ancrage et des moyens pour fixer un élément prothétique dentaire qui viendra coiffer le pilier externe et faire saillie au-dessus de l'os de mâchoire du patient pour remplacer l'élément dentaire manquant. Le pilier externe prothétique est stabilisé par rapport au pied d'ancrage à l'aide de moyens anti-rotationnels permettant d'inhiber les mouvements relatifs du pilier par rapport à ce pied d'ancrage.

En outre, il est nécessaire d'assurer une stabilité primaire de l'implant dans l'os en assurant la stabilité du pied d'ancrage dans l'os. Ce facteur est déterminant pour l'ostéo-intégration de l'implant. En effet, les mouvements masticatoires du patient sont autant d'agents de déstabilisation de cet ensemble par torsion, rotation, compression etc. auquel l'implant doit pouvoir résister.

Ainsi, deux cas distincts se présentent dans le traitement après la pose du pied d'ancrage.

Dans le premier cas, l'os est particulièrement dense et en quantité importante, ce qui est hélas rare, et il est alors possible de mettre immédiatement le pilier prothétique qui se fixe sur le pied d'ancrage puis de coller sur celui-ci la couronne dentaire.

Dans le second cas, le pied d'ancrage est mis « en nourrice » pendant une période de cicatrisation. Cela signifie que le pied d'ancrage est mis en place dans l'os et que les gencives sont refermées par-dessus. Dans ce cas, aucune force ne s'applique et il n'y a pas de risques de mobilisation du pied d'ancrage pendant la phase de cicatrisation. Ainsi, une période de six mois pour un implant maxillaire et de trois mois pour un implant mandibulaire est nécessaire pour permettre la cicatrisation. Pendant cette période, toute mobilisation ou surcharge sur l'os entraine un rejet du pied d'ancrage. Après cette période de cicatrisation, les gencives sont ouvertes et le pilier prothétique est mis en place ainsi que la dent.

Donc, sauf dans les cas ou l'os présente une densité et une quantité très favorable, il n'est pas possible de réaliser la dent pendant cette période de temps entre trois et six mois.

En outre, avec cette méthode, les résultats obtenus au niveau osseux ne permettent pas toujours de stabiliser correctement l'implant. Cela est le cas, en particulier, si l'on est en présence d'un os spongieux de faible densité, os de type 5 par exemple.

Alors, comme la rétention primaire de l'implant est une condition primordiale pour la réussite de celui-ci le pied d'ancrage ne peut pas être laissé en bouche et est donc retiré.

Actuellement, divers moyens sont donc utilisés pour stabiliser le pied d'ancrage de l'implant dans le second cas où l'os n'est pas présent en quantité importante. En particulier, il est parfois envisagé d'augmenter l'interface entre l'implant et l'os par exemple par un double filetage à la surface de l'implant ou par l'utilisation des nanotechnologies pour favoriser la formation d'une interface osseuse fiable entre l'os de la mâchoire et l'implant par reminéralisation des tissus.

On remarque encore qu'il est possible d'utiliser finalement un implant exo-osseux venant prendre appui à cheval sur les parois latérales de la gencive dans les cas où l'os est très dégradé. Un tel implant exo-osseux peut également comprendre un élément en forme d'ancrage. Dans ce cas, l'implant comprenant une plaque, un pilier et un élément d'ancrage est conçu pour être installé en tant qu'ensemble. Typiquement le pilier et l'élément d'ancrage entrent chacun en interaction différente avec la plaque qui vient à cheval sur la gencive. Des moyens anti-rotationnels sont parfois portés par la plaque et le pilier pour éviter que le pilier ne pivote. Cela est par exemple le cas dans le dispositif décrit dans la demande de brevet WO 01/93775.

Dans les dispositifs connus, il n'est pas prévu de munir le pied d'ancrage de moyens anti-rotationnels. En effet, on note que cela est alors inutile puisqu'aucun mouvement n'est susceptible de se produire entre la plaque et le pied d'ancrage. Cette solution présente néanmoins le désavantage de devoir systématiquement installer l'ensemble plaque, pied, pilier et de ne pas pouvoir moduler cette installation.

Malgré la progression de la technologie implantaire, il arrive que les implants endo-osseux continuent à présenter une mobilité à l'issue de la période de cicatrisation et subissent donc une absence d'ostéo-intégration.

On voit bien, au vu de ce qui précède, qu'il existe un besoin pour améliorer la stabilisation des implants endo-osseux par rapport à l'os de la mâchoire. De plus si l'on peut augmenter la rétention primaire de l'implant dès son installation, on pourrait, dans la majorité des cas, ne plus attendre la fin de la phase de cicatrisation pour réaliser la partie prothétique.

### Objet et résumé de l'invention

La présente invention a donc pour but principal de proposer un ensemble d'implantation dentaire selon la revendication 1.

L'invention propose pour cela un ensemble d'implantation dentaire comprenant
i) un implant dentaire endo-osseux, comprenant au moins :
   - un pied d'ancrage endo-osseux,
   - un pilier externe et
   - des moyens pour fixer un élément prothétique dentaire,
   le pied d'ancrage étant adapté à une installation dans un os de mâchoire d'un patient de manière à coopérer avec le pilier externe destiné à être fixé dans le pied d'ancrage,
   le pied d'ancrage et le pilier comprenant en outre des moyens anti-rotationnels permettant d'inhiber les mouvements relatifs du pilier par rapport au pied d'ancrage une fois le pilier placé dans le pied d'ancrage avec ou sans l'installation du dispositif additionnel et
ii) un dispositif de stabilisation additionnel destiné à être utilisé en combinaison avec l'implant dentaire endo-osseux, l'ensemble d'implantation dentaire étant caractérisé en ce que le dispositif de stabilisation additionnel comprend une plateforme centrale substantiellement rigide, laquelle comprend :
   a) Une perforation en son centre de manière à permettre l'introduction du pilier dans le pied d'ancrage de l'implant au travers du dispositif de stabilisation, et dont la forme est telle qu'elle coopère avec les moyens anti-rotationnels du pilier et du pied d'ancrage afin d'inhiber les mouvements rotationnels du pilier en complément des moyens anti-rotationnels du pilier et du pied d'ancrage,
   b) de part et d'autre de la plateforme centrale, deux prolongations longilignes latérales d'ancrage flexibles de manière à pouvoir être placées à cheval sur l'os de la mâchoire, plaquées de part et d'autre de celui-ci, chaque prolongation comprenant au moins un orifice pour positionner au moins une vis de fixation.

Avec un tel dispositif additionnel, en utilisant, d'une part, les moyens anti-rotationnels de l'implant dentaire endo-osseux lui-même implémentés sur le pied d'ancrage et sur le pilier et, d'autre part, les parois latérales des os de la mâchoire. Ces parois étant en os cortical de très forte densité contrairement à l'os spongieux, on permet une stabilisation accrue de l'implant endo-osseux.

Le dispositif de stabilisation additionnel selon l'invention est, lors de son installation en bouche, traversé par la base du pilier externe qui vient se loger dans le pied d'ancrage. Il s'agit donc d'un dispositif totalement indépendant de l'implant endo-osseux lui-même, ce qui lui permet d'être installé ou pas, au choix, en fonction des conditions rencontrées par l'implantologue.

Dans la mesure où le pied d'ancrage et le pilier comprennent eux-mêmes des moyens anti-rotationnels, il n'est pas indispensable d'installer le dispositif additionnel selon l'invention. En fait, le principe régissant la structure et le fonctionnement du dispositif additionnel selon l'invention est d'être justement d'une installation optionnelle. Pour cela, le dispositif selon l'invention présente une perforation spécifique apte à coopérer avec les moyens anti-rotationnels propres du pilier et du pied d'ancrage, toujours présents sur ceux-ci et qui peuvent fonctionner seuls en absence du dispositif additionnel.

On note ici que le dispositif de stabilisation additionnel selon l'invention peut être utilisé à demeure dans la bouche du patient afin de stabiliser en permanence l'implant endo-osseux. En particulier, l'utilisation du dispositif de stabilisation selon l'invention peut permettre, en augmentant la stabilité primaire dès installation, de se passer de la phase d'attente pour cicatrisation avant de mettre en place la prothèse dentaire. La phase de cicatrisation se fait donc après installation du pilier et de la prothèse dentaire. Le dispositif de stabilisation selon l'invention assure alors une stabilité suffisante à l'implant pour qu'il ne soit pas nécessaire de réaliser des étapes intermédiaires, notamment d'attente.

L'implant peut alors être installé complètement lors d'une seule et même intervention dans de plus nombreux cas qu'actuellement. En effet, même dans les cas où l'os de la mâchoire n'est pas très favorable au niveau de l'installation de l'implant, avec l'installation d'un dispositif de stabilisation selon l'invention, il est possible de faire cette installation en une seule fois, ce qui n'est pas le cas actuellement. Cela est très avantageux pour le patient. Généralement le dispositif de stabilisation est alors laissé à demeure.

Dans les cas les moins favorables, il est aussi envisagé que le dispositif de stabilisation puisse servir pour une stabilisation complémentaire pendant une phase de mise en nourrice durant laquelle typiquement le pilier prothétique n'est pas installé. Dans ce cas, en lieu et place du pilier prothétique, une vis de couverture très courte de même connectique que le pilier est utilisée pour boucher l'orifice du pied d'ancrage destiné à accueillir le pilier ultérieurement et pour solidariser le dispositif de stabilisation selon l'invention avec le pied d'ancrage. Cela permet de replacer la gencive par dessus et d'attendre. Ensuite, au moment de l'installation du pilier et de la prothèse dentaire, le dispositif de stabilisation peut être laissé à demeure ou être ôté avant de placer le pilier prothétique. Cette fonctionnalité n'est pas connue des dispositifs connus.

Le dispositif selon l'invention peut donc aussi servir seulement provisoirement durant la période de cicatrisation de l'implant endo-osseux en permettant aussi éventuellement la réalisation d'un élément prothétique provisoire pendant cette période.

On a vu que cette période correspond au déroulement du processus de reminéralisation et de reconstitution osseuse. En résumé, à l'issue de ce processus, le dispositif de stabilisation peut, au choix et en fonction des besoins, être retiré ou être laissé en place pour renforcer la stabilité de l'implant de manière permanente. L'invention permet d'installer quoi qu'il en soit le même pilier prévu qu'il faille laisser le dispositif additionnel en place ou non. Cela évite d'avoir à multiplier les fournitures et à gérer les approvisionnements.

Dans le cas où il est retiré, le dispositif selon l'invention est alors utilisé ponctuellement et ôté de la bouche du patient dès lors que la reminéralisation est suffisante pour stabiliser le pied d'ancrage. L'installation du pilier prévu avec sur le pied d'ancrage utilise alors seulement les moyens anti-rotationnels propres de ces deux éléments sans qu'il ne soit nécessaire de modifier le pilier ou autre.

On remarque ici que le dispositif de stabilisation selon l'invention peut, au besoin, être aisément installé et désinstallé de la bouche du patient après dépose de l'élément prothétique et du pilier prothétique ou après dépose d'une vis de même connectique et plus courte dans le cas d'une mise en nourrice.

Selon une caractéristique préférentielle de l'invention, au moins une des prolongations latérales est formée par un bras en Y, chaque branche du Y étant pourvue d'un orifice pour positionner une vis de fixation.

Cette caractéristique est particulièrement importante pour le maintien en position du dispositif de stabilisation additionnel. En effet, la forme en Y d'au moins une des prolongations latérales du dispositif lui permet de suivre les lignes de contraintes engendrées par les mouvements rotationnels et de torsion liés à la mastication du patient. Aussi, une telle forme des prolongations latérales permet de limiter fortement les sollicitations nuisibles pour l'intégrité du dispositif de stabilisation. De fortes sollicitations sur les bras minces constituant les prolongations longilignes du dispositif selon l'invention peuvent en effet mener à la rupture des prolongations latérales.

Très avantageusement, pour assurer une bonne stabilisation de l'implant, les deux orifices des branches d'un même Y étant séparés d'au moins la largeur de l'implant endo-osseux.

Selon une autre caractéristique possible de l'invention, au moins une des prolongations latérales est formée par un bras en T, chaque branche du T étant pourvue d'un orifice pour positionner une vis de fixation.

Cette configuration du dispositif, moins favorable du point de vue de la répartition des contraintes sur le dispositif de stabilisation, est néanmoins envisageable selon l'invention. Les contraintes générées par la mastication du patient pourront en l'occurrence engendrer une rupture d'un des bras du T plus aisément que dans le cas où une prolongation latérale en Y est utilisée.

Ici aussi, avantageusement, les deux orifices des branches d'un même Y étant séparés d'au moins la largeur de l'implant endo-osseux. Avantageusement, les deux prolongations latérales sont formées par des bras en Y ou en T, chaque branche du Y ou du T étant pourvue d'un orifice pour positionner une vis de fixation. Cette caractéristique permet d'optimiser la fixation du dispositif de stabilisation additionnel dans la bouche du patient. En l'occurrence, en utilisant, de part et d'autre de la plateforme centrale, des prolongations latérales en Y, on autorise que les contraintes générées en torsion par la mastication s'exercent principalement sur deux branches opposées des Y de part et d'autre de la plateforme centrale.

Dans un premier mode de réalisation, le dispositif étant destiné à être installé en combinaison avec un implant endo-osseux présentant des moyens anti-rotationnels tels que le pied d'ancrage et le pilier comprennent respectivement des portions femelle et mâle de formes polygonales régulières complémentaires, le dispositif de stabilisation est alors tel que la perforation de la plateforme présente une forme polygonale régulière, permettant d'inhiber le mouvement relatif de la portion mâle du pilier et du dispositif de stabilisation par contact des surfaces de la portion mâle polygonale du pilier avec les surfaces polygonales de la perforation de la plateforme.

Avec ces caractéristiques particulières, on autorise que les mouvements relatifs des différents éléments constituant l'implant endo-osseux et le dispositif de stabilisation ne puissent pas avoir lieu. De tels mouvements, s'ils étaient possibles, nuiraient bien sur à la stabilisation de l'implant dentaire par le dispositif de stabilisation additionnel.

Un des avantages de ce mode de réalisation est d'assurer, par un appui mécanique en butée de deux surfaces l'une sur l'autre, une inhibition des mouvements relatifs entre la portion mâle du pilier et le dispositif de stabilisation additionnel.cet appui en butée permet d'assurer la fonction anti-rotationnelle même en présence d'un léger dévissage de la vis qui maintient le pilier externe solidaire avec le pied d'ancrage.

Dans une mise en oeuvre particulière, la forme polygonale régulière de la perforation de la plateforme est la même que celle des portions mâles et femelles du pied d'ancrage et du pilier.

Cette réalisation permet d'assurer une immobilisation très forte de la portion mâle du pilier par rapport au dispositif de stabilisation car la totalité des surfaces sont en contact. En revanche le dispositif de stabilisation doit être installé en respectant une des orientations angulaires du polygone tel qu'orienté par la position du pied d'ancrage dans l'os de la mâchoire.

Selon une réalisation plus souple, la forme polygonale régulière de la perforation de la plateforme permet davantage de positions du dispositif de stabilisation qu'une forme polygonale régulière identique à celle du pilier.

Cette caractéristique fonctionnelle permet d'ajuster la position du dispositif de stabilisation par rapport à la portion mâle du pilier, avec une précision supérieure à l'amplitude angulaire minimale de mouvement permise par la forme polygonale régulière du pilier et du pied d'ancrage.

Dans une mise en oeuvre particulière, les formes polygonales du pilier et du pied d'ancrage ayant n cotés, la perforation du dispositif de stabilisation présente une forme polygonale à 2n cotés.

Cette réalisation permet de décaler pilier et dispositif de stabilisation de la moitié de l'angle minimal autorisé par la forme polygonale régulière implémentée dans les moyens anti-rotationnels du pilier et du pied d'ancrage.

Ainsi, dans des réalisations particulières, les formes polygonales du pilier et du pied d'ancrage étant hexagonales, la perforation du dispositif de stabilisation présente une forme dodécagonale, c'est à-dire douze côtés. Cette réalisation est préférentielle car elle permet d'orienter le dispositif de stabilisation par rapport au pilier externe et au pied d'ancrage avec des angles de 30°, ce qui s'avère être suffisant pour le positionnement du dispositif de stabilisation en bouche.

Dans une autre réalisation moins avantageuse que la précédente, les formes polygonales du pilier et du pied d'ancrage étant carrées, la perforation du dispositif de stabilisation présente une forme octogonale.

Cette réalisation, permettant d'orienter le pilier externe avec le dispositif de stabilisation tous les 45°, permet une adaptation assez faible des positionnements relatifs de ces deux éléments mais peut, néanmoins, être réalisée selon l'invention.

Dans un autre mode de réalisation, le dispositif de stabilisation étant destiné à être installé en combinaison avec un implant dentaire endo-osseux présentant des moyens anti-rotationnels par friction, le dispositif de stabilisation est tel que la taille de la perforation et la forme de la surface entourant la perforation dans la plateforme est telle qu'elle permet aux surfaces de friction anti-rotationnelles du pilier et du pied d'ancrage d'être en contact frictionnel avec la plateforme centrale du dispositif de stabilisation.

Ce mode de réalisation permet de perforer le dispositif de stabilisation par un simple trou circulaire, permettant le passage de la base du pilier externe vers le pied d'ancrage. Dans cette réalisation, les surfaces anti-rotationnelles par friction du pied d'ancrage et du pilier externe ne sont plus en contact l'une avec l'autre mais chacune en contact avec une des faces du dispositif de stabilisation selon l'invention.

Selon une mise en oeuvre, les moyens anti-rotationnels par friction étant tels que le pied d'ancrage et le pilier comprennent respectivement des formes coniques complémentaires femelle et mâle, le dispositif de stabilisation est tel que la plateforme centrale est embossée en cône autour de la perforation centrale.

Avec une telle réalisation, on autorise que la surface de friction du dispositif de stabilisation additionnel corresponde à la forme des surfaces du pilier et du pied d'ancrage destinées à être en friction l'une avec l'autre pour empêcher les rotations relatives de ces deux éléments.

Selon une caractéristique particulière de l'invention, une des prolongations latérales est plus longue que l'autre et est alors destinée à être fixée du coté vestibulaire de la mâchoire.

Cette caractéristique permet de différencier le coté vestibulaire et le coté palatin et autorise une meilleure adaptation du dispositif de stabilisation additionnel dans la bouche du patient.

Avantageusement, l'épaisseur du dispositif de stabilisation est comprise entre 0,2 et 1 mm et, de préférence, entre 0,4 et 0,8 mm.

Selon une caractéristique avantageuse, la longueur du dispositif de stabilisation est comprise entre 6 et 25 mm et, de préférence, entre 7 et 16 mm.

Plus précisément, selon des caractéristiques avantageuses de l'invention, les longueurs des prolongations latérales sont comprises entre 3 et 6 mm en palatin et entre 4 et 10 mm en vestibulaire.

Les caractéristiques dimensionnelles ci-dessus permettent une bonne installation du dispositif de stabilisation selon l'invention et une adaptation du dispositif en fonction de la taille de la mâchoire du patient et des os de la mâchoire.

L'invention concerne également un kit de d'implantation dentaire comprenant un implant dentaire endo-osseux et un dispositif de stabilisation selon l'invention et, au moins, deux vis ostéo-intégrables pour ajuster et fixer le dispositif de stabilisation sur un os de mâchoire maxillaire ou mandibulaire.

### Brève description des dessins

D'autres caractéristiques et avantages de la présente invention ressortiront de la description faite ci-dessous en référence aux dessins annexés qui en illustrent un exemple de réalisation dépourvu de tout caractère limitatif :
- les figures 1A et 1B montrent respectivement une vue en perspective éclatée d'un implant endo-osseux lors de son installation en combinaison avec un dispositif de stabilisation additionnel selon l'invention et une vue en perspective d'un implant installé avec un dispositif de stabilisation additionnel selon l'invention ;
- la figure 2 montre un dispositif de stabilisation selon une première mise en oeuvre d'un premier mode de réalisation selon l'invention ;
- la figure 3 montre un dispositif de stabilisation selon une deuxième mise en oeuvre d'un premier mode de réalisation selon l'invention;
- les figures 4A et 4B montrent, respectivement, une vue de dessus et une vue latérale d'un dispositif de stabilisation selon une mise en oeuvre d'un second mode de réalisation selon l'invention;
- la figure 5 montre schématiquement un pied d'ancrage susceptible de coopérer avec le dispositif de stabilisation représenté sur la figure 4 ;
- la figure 6 montre schématiquement un pilier externe susceptible de coopérer avec le dispositif de stabilisation représenté sur la figure 4 ;
- la figure 7 montre une réalisation possible d'un dispositif de stabilisation selon l'invention;
- la figure 8 montre une autre réalisation possible d'un dispositif de stabilisation selon l'invention;
- la figure 9 montre encore une autre réalisation possible selon l'invention.

### Description détaillée d'un mode de réalisation

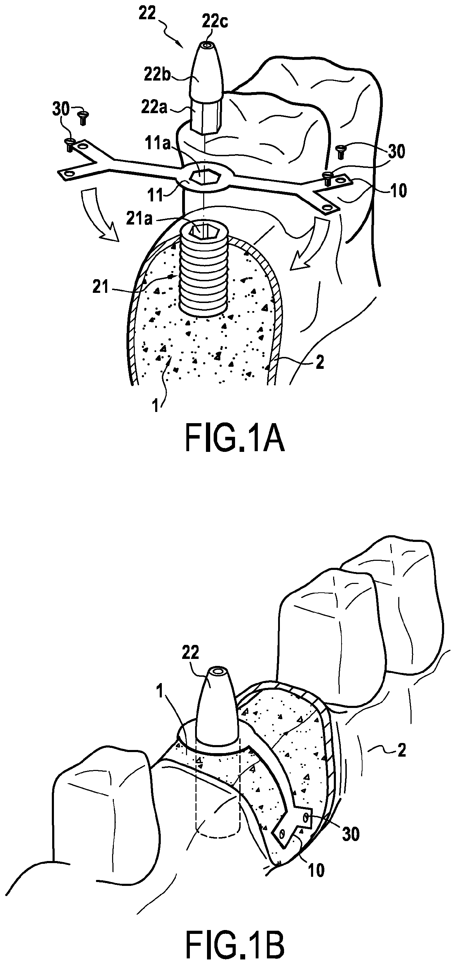

La figure 1A représente schématiquement un os de mâchoire 1 recouvert de tissu gingival 2. Cet os 1 a été perforé de manière à ce que soit introduit un pied d'ancrage 21 d'un implant dentaire endo-osseux, comprenant ce pied d'ancrage 21 et un pilier externe 22. Le pilier 22 comprend une base 22a qui constitue une portion male complémentaire d'une portion femelle 21a qui est un orifice 21a pratiqué dans le pied d'ancrage 21. Ces portions complémentaires permettent de réaliser un lien mécanique par introduction de la base 22a dans l'orifice 21a.

Le pied externe 22 comprend, en outre, un téton 22b, sur lequel est destiné à être placé l'élément prothétique. Le pilier 22 comprend un forage central 22c le perforant sur toute sa longueur et s'alignant avec un autre forage central pratiqué au fond de l'orifice 21a dans le pied d'ancrage 21 lorsque le pilier 22 est engagé dans le pied d'ancrage 21. Ces forages sont destinés à recevoir une vis de blocage fixant le pilier 22 au pied d'ancrage 21.

Une telle structure d'un implant endo-osseux est bien connus. Les portions mâles 22a du pilier externe et femelle 21a du pied d'ancrage portent des moyens anti-rotationnels permettant d'inhiber les mouvements du pilier externe 22 par rapport au pied d'ancrage 21.

Sur la figure 1A, on voit que les moyens anti-rotationnels sont basés sur l'utilisation des portions mâle et femelle de section complémentaire hexagonale c'est-à-dire en polygone régulier à six cotés. On voit bien ici que le pilier et le pied d'ancrage portent leurs propres moyens anti-rotationnels permettant de les immobiliser l'un par rapport à l'autre qu'un dispositif additionnel soit installé ou non.

Sur cette figure, est aussi représenté un tel dispositif de stabilisation additionnel 10 optionnel selon l'invention. Ce dispositif de stabilisation additionnel 10 comprend une plateforme centrale 11 substantiellement rigide, perforée en son centre 11a de manière à permettre l'introduction de la base du pilier 22a dans le pied d'ancrage 21 de l'implant au travers de ce dispositif de stabilisation 10.

Selon l'invention, on voit sur cette figure que la perforation 11a de la plateforme 11 est d'une forme telle qu'elle coopère avec les moyens anti-rotationnels du pilier 22 et du pied d'ancrage 21. En effet, la perforation 11a présente la même forme géométrique hexagonale que les sections des portions mâle et femelle, respectivement du pilier 22 et du pied d'ancrage 21. Ainsi, quand la base 22a du pilier 22 est introduite dans l'orifice 21a du pied d'ancrage 21 au travers du dispositif de stabilisation 10, le dispositif de stabilisation 10, qui est destiné à être fixé à l'os de la mâchoire par des vis 30, inhibe encore davantage les mouvements rotationnels du pilier 22 en complément des moyens anti-rotationnels entre le pilier 22 et le pied d'ancrage 21.
Il est en effet rendu solidaire en rotation avec le pied d'ancrage et le pilier grâce à la présence de la forme hexagonale centrale qui le fait coopérer avec les moyens anti-rotationnels propres du pilier et du pied d'ancrage. On comprend bien l'indépendance des moyens anti-rotationnels propres du pied d'ancrage et du pilier avec l'installation ou non du dispositif additionnel. On comprend bien aussi que la forme spécifique de la perforation est précisément adaptée aux moyens anti-rotationnels propres et indépendants du pilier et du pied d'ancrage. On remarque aussi que l'installation de la plaque qui constitue le dispositif additionnel ne peut aucunement se faire en absence de l'un ou l'autre des deux éléments pilier et pied d'ancrage ou en absence de moyens anti-rotationnels du pilier et du pied d'ancrage.

Pour être immobilisé par rapport à l'os de la mâchoire, le dispositif de stabilisation 10 comprend deux prolongations latérales d'ancrage flexibles 12 en forme de Y. Chacune des branches du Y présente un orifice, noté 13, permettant de placer une vis osso intégrable 30.

Avantageusement, l'écartement des orifices 13 pour recevoir les vis latérales permettant de maintenir le dispositif de stabilisation sera fonction de la taille de l'implant endo-osseux. On remarque ainsi qu'avantageusement, les deux vis de fixation sont écartées d'au moins la largeur de l'implant endo-osseux.

Cette fixation à l'os de la mâchoire d'un élément par ailleurs immobilisé par rapport à l'implant, permet de bloquer très efficacement les mouvements rotationnels qui peuvent être exercés sur l'implant endo-osseux.

Ainsi que cela est illustré sur la figure 1B, les prolongations latérales 12 d'ancrage sont telles qu'elles sont destinées à être placées à cheval sur l'os de la mâchoire 1 sous le tissu gingival 2, qui est préalablement incisé et soulevé afin de placer le dispositif de stabilisation. Le dispositif de stabilisation selon l'invention est avantageusement réalisé à partir d'un matériau traité par oxydation anodique.

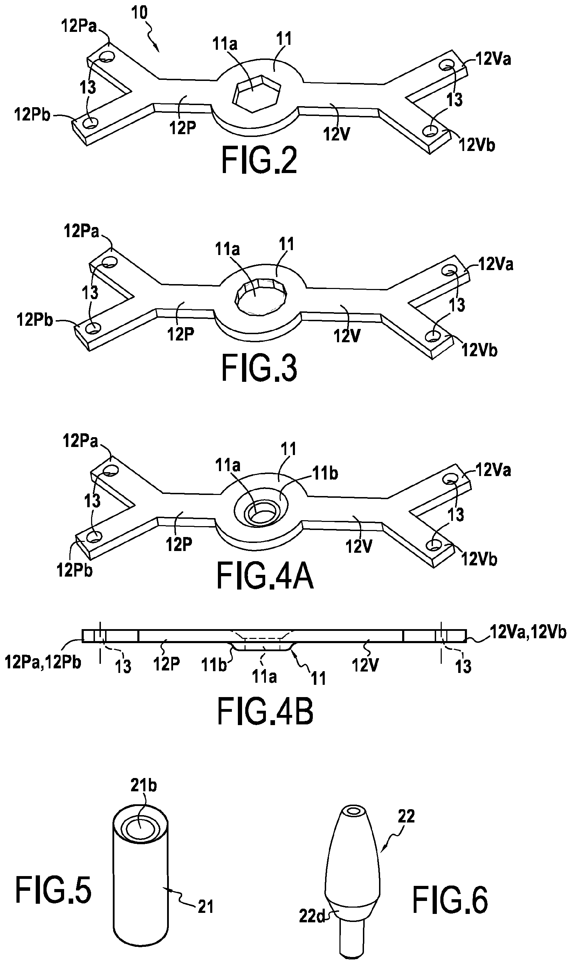

La figure 2 montre une première mise en oeuvre d'un premier mode de réalisation selon l'invention, dans lequel la perforation 11a de la plateforme centrale 11 présente une forme hexagonale. La plateforme centrale 11 présente deux prolongations latérales sous forme de bras 12P et 12V qui prennent chacun la forme d'un Y et comprennent donc en extrémités deux branches, respectivement 12Va, 12Vb et 12Pa, 12Pb. On remarque, sur cette figure, que le bras 12V est plus long que le bras 12P. Cela répond à un besoin anatomique. En effet, il est souhaitable que la prolongation latérale 12V destinée à être fixée du coté vestibulaire soit plus longue que la prolongation latérale 12P destinée à être fixée du coté palatin.

La figure 3 représente une seconde mise en oeuvre du premier mode de réalisation selon l'invention, dans lequel la perforation 11a comprend douze cotés et présente donc une forme en polygone régulier dodécagonal. Cette mise en oeuvre permet de pouvoir placer l'hexagone du pilier 22 représenté sur la figure 1 à l'intérieur de la perforation 11a en six positions angulaires différentes par rapport au dispositif de stabilisation au lieu de trois avec la première mise en oeuvre du premier mode de réalisation représenté sur la figure 2.

Cela permet donc de mieux ajuster le positionnement du dispositif de stabilisation 10 par rapport, à la fois, à la mâchoire et aux portions mâle et femelle du pilier externe 22 et du pied d'ancrage 21. Cela autorise un positionnement du dispositif de stabilisation 10 plus adaptable et donc plus efficace. Dans la mesure où l'hexagone, représenté en pointillés sur la figure 3, bute, de toute façon, sur la surface du dodécagone du dispositif de stabilisation 10, les propriétés anti-rotationnelles sont assurées entre le dispositif et l'ensemble pied d'ancrage/pilier.

La figure 4 présente un dispositif de stabilisation selon une mise en oeuvre d'un second mode de réalisation. Ce dispositif de stabilisation 10 est destiné à fonctionner en coopération avec un implant comprenant un pied d'ancrage du type de celui représenté sur la figure 5 et un pilier externe du type de celui-représenté sur la figure 6.Dans ce mode de réalisation, des moyens anti-rotationnels par friction sont utilisés entre le pied externe 22 de la figure 6 et le pied d'ancrage 21 de la figure 5 pour inhiber leurs mouvements relatifs . De tels moyens anti-rotationnels par friction sont généralement constitués par une portion 22d de la base du pilier 22 présentant une forme conique et destinée à venir s'appuyer sur une forme complémentaire, conique également, 21b du pied d'ancrage 21. Lorsque le pilier externe 22 est placé dans le pied d'ancrage et fixé par vissage d'une vis introduite dans l'orifice 22c, la présence des surfaces coniques en frottement l'une sur l'autre permet d'éviter la rotation relative du pilier 22 par rapport au pied d'ancrage 21. Ici encore, on comprend l'indépendance de ces moyens anti-rotationnels implémentés sur le pied d'ancrage et le pilier par rapport à l'installation ou non d'un dispositif additionnel de stabilisation selon l'invention.

Sur la figure 4, le dispositif de stabilisation 10 comprend ainsi une perforation 11a entourée d'une zone 11b embossée en portion de cône, semblable à celle des surfaces de friction du pilier externe 22 et du pied d'ancrage 21.

La figure 5 représente un pied d'ancrage 21 comprenant une surface en portion de cône 21b destinée à venir au contact d'une portion de cône 22d mâle, présente sur le pied externe 22, ainsi que représenté sur la figure 6.

La zone embossée 11b autour de la perforation 11a du dispositif de stabilisation complémentaire représenté sur les figures 4A et 4B forme deux surfaces identiques, respectivement à la surface du pilier et à la surface du pied, de part et d'autre du dispositif de stabilisation. Cela autorise que la face inférieure du dispositif de stabilisation vienne s'appuyer sur la surface de friction 21b du pied d'ancrage 21. En outre, lorsque le pilier externe 22 est introduit dans le pied d'ancrage 21, la surface en portion de cône 22d du pilier 22 vient en contact de la face supérieure de la zone embossée 11b. Cela bloque ainsi par friction l'ensemble des mouvements relatifs des trois pièces mécaniques.

On remarque par ailleurs que les surfaces du pilier et du pied d'ancrage doivent être telles qu'elles puissent coopérer en tant que surfaces de friction avec ou sans le dispositif de stabilisation.

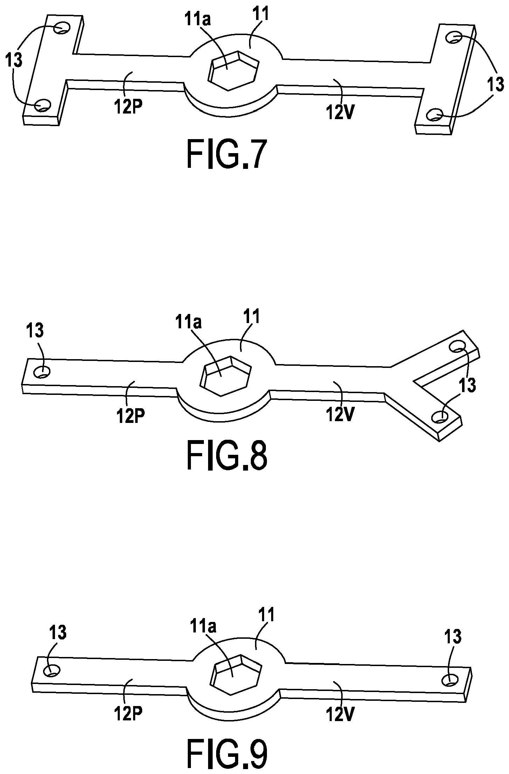

Les figures 7, 8 et 9 présentent des réalisations particulières possibles de dispositifs de stabilisation selon l'invention.

Sur la figure 7, les prolongations latérales sont en forme de T, chaque branche de la partie supérieure du T étant munie d'un orifice permettant de placer des vis osso-intégrables de fixation dans l'os de la mâchoire.

On comprend que cette réalisation possible de l'invention présente l'inconvénient que les branches et bras des prolongations latérales ne suivent pas les lignes de contraintes qu'est susceptible de devoir supporter le dispositif de stabilisation selon l'invention. Ainsi, cette réalisation, bien que permettant de participer à la stabilisation de l'implant endo-osseux, présente le désavantage de risquer de présenter des faiblesses, voire des ruptures, au niveau des branches du T.

La figure 8 présente une réalisation selon laquelle une prolongation latérale présente une forme en Y, alors que l'autre est un simple bras droit muni à son extrémité d'un orifice 13 pour que soit placée une unique vis de fixation. Un tel bras droit unique est avantageusement décalé par rapport au grand axe du dispositif de stabilisation. Ce décalage sera par exemple d'un angle inférieur ou égal à 20° et de préférence entre 8 et 15°. Un tel décalage évite que la vis de fixation du dispositif de stabilisation puisse aller toucher le pied d'ancrage lors de la fixation du dispositif de stabilisation. Le choix de la valeur de cet angle de décalage dépend de la longueur du bras unique et en particulier de cette longueur par rapport à la profondeur du pied d'ancrage. Cette réalisation autorise une stabilisation de l'implant endo-osseux mais avec une moins bonne performance que lorsque quatre vis placées sur les prolongations latérales en Y ou en T sont utilisées.

On comprend, en effet, qu'un bras simple ne supportant qu'un orifice pour placer une vis de fixation, sera davantage susceptible de se tordre sous contrainte qu'un dispositif comprenant des bras en Y pour placer deux vis éloignées d'au moins la largeur de l'implant. Enfin, la figure 9 représente une réalisation du dispositif de stabilisation dans lequel les deux prolongations latérales sont des simples bras munis à leurs extrémités d'un orifice 13 pour l'introduction d'une vis de fixation sur l'os de la mâchoire.

Il faut noter qu'une telle réalisation autorise assez peu de stabilisation en torsion de l'implant endo-osseux malgré une bonne participation à la stabilisation additionnelle en rotation de l'implant.

On remarque qu'un dispositif de stabilisation selon l'invention peut être installé avec divers types d'implants cylindriques endo-osseux classiques et préalablement existants dès lors qu'ils présentent des moyens anti-rotationnels. On comprend bien qu'alors, les caractéristiques de la perforation du dispositif additionnel sont alors adaptées à ces moyens anti-rotationnels de l'implant à installer.

Comme l'invention permet de stabiliser davantage l'implant endo-osseux, elle évite la multiplication de l'installation d'implants, par exemple pour installer un bridge, ou encore d'attendre de longs mois pour réaliser l'installation d'une prothèse. En particulier, pour l'installation de bridge sur trois dents, il sera possible de ne mettre que deux implants au lieu de trois, tel qu'actuellement pratiqué.

On remarque, en outre, que la forme en Y ou en T des prolongations latérales du dispositif de stabilisation qui ne sont formées que de bras fins, permet de recouvrir une faible partie de l'os. Cela permet de ne pas compromettre le mécanisme de reminéralisation et de reconstitution du tissu osseux autour de la perforation réalisée pour placer le pied d'ancrage dans l'os de la mâchoire. Des éléments recouvrant l'os sur des zones plus larges empêchent le maintien d'une bonne vascularisation ce qui nuirait à la bonne reconstruction osseuse.

On remarque enfin que diverses mises en oeuvre peuvent être réalisées selon les principes de l'invention. En particulier, les moyens anti-rotationnels peuvent être cumulés, c'est-à-dire qu'ils peuvent combiner une forme polygonale avec une surface conique de friction. Par exemple le pilier externe de la figure 5 comprendrait alors une base de section hexagonale sous le cône au lieu d'une base cylindrique ainsi que représenté. Le pied comprendrait alors un orifice de section également hexagonale sous la surface conique.

On remarque, enfin, qu'encore d'autres réalisations mixtes pourront être réalisées, utilisant l'une ou l'autre des formes des prolongations latérales et l'un ou l'autre, ou les deux, des moyens anti-rotationnels présentés dans la description ci-dessus.

## Revendications

1. Ensemble d'implantation dentaire comprenant
i) un implant dentaire endo-osseux, comprenant au moins :
- un pied d'ancrage (21) endo-osseux,
- un pilier externe (22) et
- des moyens (22b) pour fixer un élément prothétique dentaire,
le pied d'ancrage (21) étant adapté à une installation dans un os de mâchoire (1) d'un patient de manière à coopérer avec le pilier externe (22) destiné à être fixé dans le pied d'ancrage (21),
le pied d'ancrage (21) et le pilier (22) comprenant en outre des moyens anti-rotationnels (21a, 22a) permettant d'inhiber les mouvements relatifs du pilier (22) par rapport au pied d'ancrage (21) une fois le pilier (22) placé dans le pied d'ancrage (21) avec ou sans l'installation du dispositif additionnel
et
ii) un dispositif de stabilisation additionnel (10) destiné à être utilisé en combinaison avec l'implant dentaire endo-osseux,
l'ensemble d'implantation dentaire étant **caractérisé en ce que**
le dispositif de stabilisation additionnel (10) comprend une plateforme centrale (11) substantiellement rigide, laquelle comprend :
a) Une perforation en son centre (11a) de manière à permettre l'introduction du pilier (22) dans le pied d'ancrage (21) de l'implant au travers du dispositif de stabilisation (10), et dont la forme est telle qu'elle coopère avec les moyens anti-rotationnels du pilier (22) et du pied d'ancrage (21) afin d'inhiber les mouvements rotationnels du pilier (22) en complément des moyens anti-rotationnels du pilier (22) et du pied d'ancrage (21),
b) de part et d'autre de la plateforme centrale (11), deux prolongations longilignes latérales d'ancrage flexibles (12) de manière à pouvoir être placées à cheval sur l'os (1) de la mâchoire, plaquées de part et d'autre de celui-ci, chaque prolongation (12) comprenant au moins un orifice (13) pour positionner au moins une vis de fixation (30).

2. L'ensemble d'implantation dentaire selon la revendication 1, **caractérisé en ce qu'**au moins une des prolongations latérales (12) du dispositif de stabilisation additionnel (10) est formée par un bras en Y, chaque branche du Y (12Va,12Vb,12Pa,12Pb) étant pourvue d'un orifice (13) pour positionner une vis de fixation (30).

3. L'ensemble d'implantation dentaire selon la revendication 2, **caractérisé en ce que** les deux orifices (13) des branches (12Va,12Vb ou 12Pa,12Pb) d'un même Y du dispositif de stabilisation additionnel (10) sont séparés d'au moins la largeur de l'implant endo-osseux.

4. L'ensemble d'implantation dentaire selon la revendication 1, **caractérisé en ce qu'**au moins une des prolongations latérales du dispositif de stabilisation additionnel (10) est formée par un bras en T, chaque branche du T étant pourvue d'un orifice pour positionner une vis de fixation.

5. L'ensemble d'implantation dentaire selon l'une des revendications 2, 3 et 4, **caractérisé en ce que** les deux prolongations latérales (12) du dispositif de stabilisation additionnel (10) sont formées par des bras en Y ou en T, chaque branche du Y ou du T étant pourvue d'un orifice (13) pour positionner une vis de fixation.

6. L'ensemble d'implantation dentaire selon l'une des revendications précédentes, **caractérisé en ce que** l'implant endo-osseux présentant des moyens anti-rotationnels tels que le pied d'ancrage (21) et le pilier (22) comprennent respectivement des portions femelle et maie de formes polygonales régulières complémentaires, le dispositif de stabilisation (10) est tel que la perforation (lia) de la plateforme (11) présente une forme polygonale régulière permettant d'inhiber le mouvement relatif de la portion maie du pilier (22) et du dispositif de stabilisation (10) par contact des surfaces de la portion maie polygonale du pilier (22) avec les surfaces polygonales de la perforation (lia) de la plateforme (11).

7. L'ensemble d'implantation dentaire selon la revendication 6, **caractérisé en ce que** la forme polygonale régulière de la perforation (lia) de la plateforme (11) est la même que celle des portions maie et femelle du pied d'ancrage (21) et du pilier (22).

8. L'ensemble d'implantation dentaire selon la revendication 6, **caractérisé en ce que** les formes polygonales du pilier (22) et du pied d'ancrage (21) ayant N cotés, la perforation (lia) du dispositif de stabilisation (10) présente une forme polygonale à 2N cotés, la forme polygonale régulière de la perforation (lia) de la plateforme (11) permettant ainsi davantage de positions du dispositif de stabilisation qu'une forme polygonale régulière identique à celle du pilier (22).

9. L'ensemble d'implantation dentaire selon la revendication 8, **caractérisé en ce que** les formes polygonales du pilier (22) et du pied d'ancrage (21) étant hexagonales, la perforation (lia) du dispositif de stabilisation (10) présente une forme dodécagonale.

10. L'ensemble d'implantation dentaire selon la revendication 8, **caractérisé en ce que** les formes polygonales du pilier (22) et du pied d'ancrage (21) étant carrées, la perforation (lia) du dispositif de stabilisation (10) présente une forme octogonale.

11. L'ensemble d'implantation dentaire selon l'une des revendications 1 à 5, **caractérisé en ce que** l'implant dentaire endo-osseux présentant des moyens anti-rotationnels par friction, le dispositif (10) est tel que la taille de la perforation (lia) et la forme de la surface entourant la perforation (lia) dans la plateforme (11) est telle qu'elle permet aux surfaces de friction anti-rotationnelles du pilier (22) et du pied d'ancrage (21) d'être en contact frictionnel avec la plateforme centrale (11) du dispositif de stabilisation (10).

12. L'ensemble d'implantation dentaire selon la revendication 11, **caractérisé en ce que**, les moyens anti-rotationnels par friction étant tels que, le pied d'ancrage (21) et le pilier (22) comprenant respectivement des formes coniques complémentaires femelle et maie (21b,22d), le dispositif de stabilisation (10) est tel que la plateforme centrale (11) est embossée en cône (11b) autour de la perforation centrale (11a).

13. L'ensemble d'implantation dentaire selon l'une des revendications précédentes, **caractérisé en ce qu'**une des prolongations latérales (12V) du dispositif de stabilisation additionnel (10) est plus longue que l'autre (12P) et est alors destiné à être fixée du coté vestibulaire de la mâchoire.

14. L'ensemble d'implantation dentaire selon l'une des revendications précédentes, **caractérisé en ce que** l'épaisseur du dispositif de stabilisation (10) est comprise entre 0,2 et 1 millimètres, et de préférence entre 0,4 et 0,8 millimètres.

15. L'ensemble d'implantation dentaire selon l'une des revendications précédentes, **caractérisé en ce que** la longueur du dispositif de stabilisation (10) est comprise entre 6 et 25 millimètres et de préférence entre 7 et 16 millimètres.

16. L'ensemble d'implantation dentaire selon la revendication 13, **caractérisé en ce que** les longueurs des prolongations latérales (12P,12V) du dispositif de stabilisation additionnel (10) sont comprises entre 3 et 6 millimètres en palatin et entre 4 et 10 millimètres en vestibulaire.

## Patentansprüche

1. Zahnimplantationskit, umfassend
i) ein enossales Zahnimplantat, mindestens umfassend:
- ein enossales Verankerungsteil (21),
- einen äußeren Schaft (22) und
- Mittel (22b) zur Befestigung eines zahnprothetischen Elementes,
wobei das enossale Verankerungsteil (21) für das Einsetzen in einen Kieferknochen (1) eines Patienten derart eingerichtet ist, dass es mit dem äußeren Schaft (22) zusammenwirkt, der dazu bestimmt ist, im Verankerungsteil (21) befestigt zu werden,
wobei das Verankerungsteil (21) und der Schaft (22) außerdem Drehungshemmmittel (21a, 22a) aufweisen, die erlauben, Relativbewegungen des Schaftes (22) gegenüber dem Verankerungsteil (21) zu verhindern, sobald der Schaft (22) mit oder ohne Anbringung der Zusatzvorrichtung in das Verankerungsteil (21) eingesetzt ist,
und
ii) eine Vorrichtung zur zusätzlichen Stabilisierung (10), dazu bestimmt, in Verbindung mit dem enossalen Zahnimplantat verwendet zu werden,
wobei das Zahnimplantationskit **dadurch gekennzeichnet ist, dass** die Vorrichtung zur zusätzlichen Stabilisierung (10) eine im Wesentlichen starre Mittelplatte (11) umfasst, aufweisend:
a) eine mittige Durchbrechung (11a), derart, dass sie das Einfügen des Schaftes (22) in das Verankerungsteil (21) des Implantates durch die Stabilisierungsvorrichtung (10) hindurch erlaubt, deren Form derart ist, dass sie mit den Drehungshemmmitteln des Schaftes (22) und des Verankerungsteils (21) zusammenwirkt, um zusätzlich zu den Drehungshemmmitteln des Schaftes (22) und des Verankerungsteils (21) Drehungen des Schaftes (22) zu verhindern,
b) beiderseits der Mittelplatte (11) zwei flexible, längliche, seitliche Verankerungsverlängerungen (12), derart, dass sie auf dem Kieferknochen (1) lagernd angeordnet werden können, beiderseits von diesem anliegend, wobei jede Verlängerung (12) mindestens eine Öffnung (13) zum Einsetzen mindestens einer Verankerungsschraube (30) aufweist.

2. Zahnimplantationskit nach Patentanspruch 1, **dadurch gekennzeichnet, dass** mindestens eine der seitlichen Verlängerungen (12) der zusätzlichen Stabilisierungsvorrichtung (10) von einem Y-förmigen Arm gebildet wird, wobei jeder Zweig des Y (12Va, 12Vb, 12Pa, 12Pb) mit einer Öffnung (13) zum Einsetzen einer Verankerungsschraube (30) versehen ist.

3. Zahnimplantationskit nach Patentanspruch 2, **dadurch gekennzeichnet, dass** die beiden Öffnungen (13) der Zweige (12Va, 12Vb oder 12Pa, 12Pb) jeweils eines Y der zusätzlichen Stabilisierungsvorrichtung (10) um mindestens die Breite des enossalen Implantats voneinander getrennt sind.

4. Zahnimplantationskit nach Patentanspruch 1, **dadurch gekennzeichnet, dass** mindestens eine der seitlichen Verlängerungen der zusätzlichen Stabilisierungsvorrichtung (10) von einem T-förmigen Arm gebildet wird, wobei jeder Zweig des T mit einer Öffnung zum Einsetzen einer Verankerungsschraube (30) versehen ist.

5. Zahnimplantationskit nach Patentanspruch 2, **dadurch gekennzeichnet, dass** beide seitlichen Verlängerungen (12) der zusätzlichen Stabilisierungsvorrichtung (10) von Y- oder T-förmigen Armen gebildet wird, wobei jeder Zweig des Y oder des T mit einer Öffnung (13) zum Einsetzen einer Verankerungsschraube versehen ist.

6. Zahnimplantationskit nach einem der vorangehenden Patentansprüche, **dadurch gekennzeichnet, dass** in dem Fall, dass das enossale Implantat Drehungshemmmittel aufweist, wie das Verankerungsteil (21) und der Schaft (22), die jeweils Ausnehmungen und Vorsprünge in Form komplementärer regelmäßiger Polygone umfassen, die Stabilisierungsvorrichtung (10) derart ausgebildet ist, dass die Durchbrechung (lia) der Platte (11) die Form eines regelmäßigen Polygons aufweist, die erlaubt, die Bewegung des vorspringenden Teils des Schaftes (22) relativ zur Stabilisierungsvorrichtung (10) durch Berührung der Oberflächen des vorspringenden Teils des Schaftes (22) mit den polygonalen Oberflächen der Durchbrechung (Iia) der Platte (11) zu verhindern.

7. Zahnimplantationskit nach Patentanspruch 6, **dadurch gekennzeichnet, dass** die regelmäßig-polygonale Form der Durchbrechung (lia) der Platte (11) dieselbe ist, wie die der vorspringenden und ausgenommenen Teile des Verankerungsteils (21) und des Schaftes (22).

8. Zahnimplantationskit nach Patentanspruch 6, **dadurch gekennzeichnet, dass** in dem Fall, dass die polygonalen Formen des Schaftes (22) und des Verankerungsteils (21) N Seiten aufweisen, die Durchbrechung (lia) der Stabilisierungsvorrichtung (10) eine polygonale Form mit 2N Seiten aufweist, wodurch die regelmäßig polygonale Form der Durchbrechung (Iia) der Platte (11) mehr Stellungen der Stabilisierungsvorrichtung zulässt, als eine regelmäßig-polygonale Form, die mit der des Schaftes (22) identisch ist.

9. Zahnimplantationskit nach Patentanspruch 8, **dadurch gekennzeichnet, dass** die Durchbrechung (Iia) der Stabilisierungsvorrichtung (10) eine dodekagonale Form aufweist, wenn die polygonalen Formen des Schaftes (22) und des Verankerungsteils (21) hexagonal sind.

10. Zahnimplantationskit nach Patentanspruch 8, **dadurch gekennzeichnet, dass** die Durchbrechung (lia) der Stabilisierungsvorrichtung (10) eine oktogonale Form aufweist, wenn die polygonalen Formen des Schaftes (22) und des Verankerungsteils (21) quadratisch sind.

11. Zahnimplantationskit nach einem der Patentansprüche 1 bis 5, **dadurch gekennzeichnet, dass** in dem Fall, dass das enossale Implantat Reibungsdrehungshemmmittel aufweist, die Stabilisierungsvorrichtung (10) derart ausgebildet ist, dass die Größe der Durchbrechung (Iia) und die Form der die Durchbrechung (lia) in der Platte (11) umgebende Oberfläche derart ausgebildet sind, dass sie den drehungshemmenden Reibflächen des Schaftes (22) und des Verankerungsteils (21) erlauben, mit der Mittelplatte (11) der Stabilisierungsvorrichtung (10) in Reibungsberührung zu stehen.

12. Zahnimplantationskit nach Patentanspruch 11, **dadurch gekennzeichnet, dass** in dem Fall, dass die Reibungsdrehungshemmmittel derart sind, dass das Verankerungsteil (21) und der Schaft (22) jeweils komplementäre ausgenommene und vorspringende konische Formen (21b, 22d) aufweisen, die Stabilisierungsvorrichtung (10) derart ausgebildet ist, dass die Mittelplatte (11) um die mittige Durchbrechung (11a) konisch (11b) eingesenkt ist.

13. Zahnimplantationskit nach einem der vorangehenden Patentansprüche, **dadurch gekennzeichnet, dass** eine der seitlichen Verlängerungen (12V) der zusätzlichen Stabilisierungsvorrichtung (10) länger ist, als die andere (12P) und dazu bestimmt ist, auf der vestibulären Seite des Kiefers befestigt zu werden.

14. Zahnimplantationskit nach einem der vorangehenden Patentansprüche, **dadurch gekennzeichnet, dass** die Dicke der Stabilisierungsvorrichtung (10) zwischen 0,2 und 1 Millimeter beträgt, vorzugsweise zwischen 0,4 und 0,8 Millimeter.

15. Zahnimplantationskit nach einem der vorangehenden Patentansprüche, **dadurch gekennzeichnet, dass** die Länge der Stabilisierungsvorrichtung (10) zwischen 6 und 25 Millimetern beträgt, vorzugsweise zwischen 7 und 16 Millimetern.

16. Zahnimplantationskit nach Patentanspruch 13, **dadurch gekennzeichnet, dass** die Längen der seitlichen Verlängerungen (12P, 12V) der zusätzlichen Stabilisierungsvorrichtung (10) palatinal zwischen 3 und 6 Millimetern beträgt und vestibulär zwischen 4 und 10 Millimetern.

## Claims

1. A dental implantation kit comprising :
i) An endo-osseous dental implant, comprising at least:
• One endo-osseous anchoring foot (21),
• One external pillar (22) and
• Means (22b) for fixing a dental prosthetic element,
The anchoring foot (21) adapted for installation in a jaw bone (1) of a patient so as to cooperate with the external pillar (22) intended to be fixed in the anchoring foot (21),
The anchoring foot (21) and the external pillar (22) further comprising anti-rotational means (21a, 22a)enabling the inhibition of the relative movements of the pillar (22) beside the anchoring foot (21), one the pillar (22) is placed in the anchoring foot (21) with or without the installation of the additional device
and
ii) An additional stabilization device (10) intended to be used in combination with the endo-osseous dental implant,
The dental implantation kit being **characterized in that**:
the additional stabilization device (10), comprising a substantially rigid central platform (11), which comprises:
a) a perforation at its centre (11a) so as to allow the introduction of the pillar (22) into the anchoring foot (21) of the implant through the stabilization device (10), whose shape is cooperating with the anti-rotational means of the pillar (22) and of the anchoring foot (21) in order to inhibit the rotational movements of the pillar (22) in addition to the anti-rotational means of the pillar (22) and of the anchoring foot (21),
b) two flexible anchoring side slender extensions (12) on either side of the central platform (11) so as to be able to be placed straddling the bone (1) of the jaw, flattened on either side of the latter, each extension comprising at least one orifice (13) for positioning at least one fixing screw (30).

2. The dental implantation kit according to claim 1, **characterized in that** at least one of the side extensions(12) of the additional stabilization device (10) is formed by a Y-shaped arm, each branch (12Va, 12Vb, 12Pa, 12Pb) of the Y being provided with an orifice (13) in order to position a fixing screw (30).

3. The dental implantation kit according to claim 2, **characterized in that** both orifices (13) of the branches (12Va, 12Vb, 12Pa, 12Pb) of a same Y of the additional stabilization device (10) being separated by at least the width of the endo-osseous implant.

4. The dental implantation kit according to claim 2, **characterized in that** at least one of the side extensions of the additional stabilization device (10) is formed by a T-shaped arm, each branch of the T being provided with an orifice for positioning a fixing screw.

5. The dental implantation kit according to claims 2, 3 and 4, **characterized in that** both side extensions (12) of the additional stabilization device (10) are formed by Y-shaped or T-shaped arms, each branch of the Y or of the T being provided with an orifice (13) for positioning a fixing screw.

6. The dental implantation kit according to one of the preceding claims, **characterized in that** the endo-osseous implant having anti-rotational means such that the anchoring foot (21) and the pillar (22) respectively comprise female and male portions of matching regular polygonal shapes, the stabilization device (10) is such that the perforation (11a) of the platform (11) has a regular polygonal shape allowing to inhibit the relative movement of the male portion of the pillar (22) and of the stabilization device (10) by contact of the surfaces of the polygonal male portion of the pillar (22) with the polygonal surfaces of the perforation (11a) of the platform (11).

7. The dental implantation kit according to claim 6, **characterized in that** the regular polygonal shape of the perforation (11a) of the platform (11) is the same as that of the male and female portions of the anchoring foot (21) and of the pillar (22).

8. The dental implantation kit according to claim 6, **characterized in that** the polygonal shapes of the pillar (22) and of the anchoring foot (21) have N sides, the perforation (11a) of the stabilization device (10) has a polygonal shape with 2N sides, the regular polygonal shape of the perforation (11a) of the platform (11) thereby allowing more positions of the stabilization device than a regular polygonal shape identical with that of the pillar (22) .

9. The dental implantation kit according to claim 8, **characterized in that** the polygonal shapes of the pillar (22) and of the anchoring foot (21) are hexagonal, the perforation (11a) of the stabilization device (10) has a dodecagonal shape.

10. The dental implantation kit according to claim 8, **characterized in that** the polygonal shapes of the pillar (22) and of the anchoring foot (21) are hexagonal, the perforation (11a) of the stabilization device (10) has a octagonal shape

11. The dental implantation kit according to any one of claims 1 to 5, **characterized in that** the endo-osseous dental implant having anti-rotational frictional means, the device (10) is such that the size of the perforation (11a) and the shape of the surface surrounding the perforation (11a) in the platform (11) are such that it allows the anti-rotational frictional surfaces of the pillar (22) and of the anchoring foot (21) to be in frictional contact with the central platform (11) of the stabilization device (10).

12. The dental implantation kit according to claim 11, **characterized in that** the anti-rotational frictional means are such that the anchoring foot (21) and the pillar (22) respectively comprise female and male matching conical shapes (21b, 22d), the stabilization device (10) is such that the central platform (11) is embossed as a cone (11b) around the central perforation (11a).

13. The dental implantation kit according to one of the preceding claims, **characterized in that** one of the side extensions (12V) of the additional stabilization device (10) is longer than the other one (12P) and then intended to be fixed on the vestibular side of the jaw.

14. The dental implantation kit according to one of the preceding claims, **characterized in that** the thickness of the stabilization device (10) is comprised between 0.2 and 1 millimeter, and preferably between 0.4 and 0.8 millimeter.

15. The dental implantation kit according to one of the preceding claims, **characterized in that** the length of the stabilization device (10) is comprised between 6 and 25 millimeters and preferably between 7 and 16 millimeters.

16. The dental implantation kit according to one of the preceding claims, **characterized in that** the lengths of the side extensions (12P, 12V) of the additional stabilization device (10)are comprised between 3 and 6 millimeters on the palatine side and between 4 and 10 millimeters on the vestibular side.
